# EUROPÄISCHE PATENTSCHRIFT

(11) **EP 4 107 210 B1**
(45) Veröffentlichungstag und Bekanntmachung des Hinweises auf die Patenterteilung: **20.09.2023**
(21) Anmeldenummer: 20745172.5
(22) Anmeldetag: 22.07.2020
(51) Int. Cl.: C08G 77/18, C08L 83/04

(54) **ALKYLSILIKATE**
ALKYL SILICATES
SILICATES D'ALKYLE

(43) Veröffentlichungstag der Anmeldung: 28.12.2022
(73) Patentinhaber: Wacker Chemie AG, 81737 München (DE)
(72) Erfinder: FRITZ-LANGHALS, Elke, 85521 Ottobrunn (DE); WEIDNER, Richard, 84489 Burghausen (DE)
(74) Vertreter: Mieskes, Klaus Theoderich
(86) Internationale Anmeldenummer: PCT/EP2020/070678
(87) Internationale Veröffentlichungsnummer: WO 2022/017598

(56) Entgegenhaltungen:
- US-A- 2 758 127
- ABE YOSHIMOTO ET AL: "Alkoxysilanes. II. Preparation of (tributoxysiloxy)chlorosilanes and silanols, and their polymeric substances", BULLETIN OF THE CHEMICAL SOCIETY OF JAPAN,, Bd. 42, Nr. 4, 1. April 1969 (1969-04-01), Seiten 1118-1123, XP009102304, ISSN: 0009-2673, DOI: 10.1246/BCSJ.42.1118 in der Anmeldung erwähnt
- OKAWARA ROKURO ET AL: "Isopropoxypolysiloxanes", BULLETIN OF THE CHEMICAL SOCIETY OF JAPAN, Bd. 27, Nr. 1, 1. Januar 1954 (1954-01-01) , Seiten 45-46, XP055793773, ISSN: 0009-2673, DOI: 10.1246/bcsj.27.45
- OKAWARA ROKURO ET AL: "Alkylalkoxypolysiloxanes. II. Ethylisopropoxypolysiloxanes", BULLETIN OF THE CHEMICAL SOCIETY OF JAPAN, Bd. 27, Nr. 9, 1. September 1954 (1954-09-01), Seiten 582-585, XP055793771, ISSN: 0009-2673, DOI: 10.1246/bcsj.27.582

## Beschreibung

Die Erfindung betrifft neuartige Alkylsilikate der mittleren Formel (**I**).

Silicone sind eine technisch sehr wichtige Produktklasse, die in zahlreichen Technologiefeldern eingesetzt wird. Technisch wichtige Eigenschaften der Silicone sind beispielsweise ihre geringe Oberflächenspannung und ihre geringe Tendenz zur Kristallisation, welche Silicone gegenüber Kohlenstoffbasierten Polymeren auszeichnet. Silicone bleiben über weite Temperaturbereiche flüssig, sie weisen sehr niedrige Glastemperaturen auf.

Silicone werden aufgrund der enthaltenen Si-Alkylgruppierungen in der Umwelt jedoch nur sehr schwer abgebaut. Diese Eigenschaft schränkt die Anwendungsmöglichkeiten für Silicone in zunehmendem Maße ein. Deshalb besteht ein stetig wachsender Bedarf an alternativen, prinzipiell hydrolytisch spaltbaren aber dennoch für praktische Anwendungen hinreichend hydrolysestabilen Materialien, welche die herkömmlichen Silicone ersetzen können.

Aufgabe der Erfindung ist es daher, Materialien zu finden, die keine persistenten Si-C-Bindungen enthalten, dennoch ähnliche Eigenschaften, wie Glastemperatur, Oberflächenspannung, Dichte und hydrophobes Verhalten, aufweisen wie Silicone und daher Silicone ersetzen können.

RU 2263115 C1 offenbart Alkylsilikate der allgemeinen Formel **H₅C₂O-[(OC₂H₅)₂SiO]ₙ₋ₓ[(OR)₂SiO]ₓ-C₂H₅,** mit n = 3, 4, 5 und x = 1-6 und worin die Reste **R** gleiche oder verschiedene Reste sind, die ausgewählt sind aus der Gruppe bestehend aus 2-Phenylethylrest, Cinnamylrest, Thymylrest, Vanillylrest, 5-Formylphenylrest, Eugenylrest, Santalylrest und Santalidylrest, Menthylrest und Isobutylrest. Diese Verbindungen eignen sich als Modifizierungsmittel für Textilien.

Abe et al., Bull. Soc. Chim. 1969, 42, 1118 offenbart ein Verfahren zur Herstellung von Tributoxysiloxysilanolen der Formel **[(BuO)₃SiO]ₓSi(OH)_{y},** mit x = 2 für Bu = tert-Butyl bzw. x = 2 oder 3 für Bu = 2-Butyl, y = 4 - x. Für diese Verbindungen ergibt sich somit ein molarer Anteil an Resten **R^{y}** = H von bis zu 50 mol-%, bezogen auf die Summe aller Alkylreste.

US2758127 offenbart ein Verfahren zur Herstellung von Alkylsilikaten der allgemeinen Formel **R-[(OR)₂SiO]ₓ-OR,** mit x = 2, 3 oder 4 und worin die Reste R jeweils ein Alkylrest mit 3 bis 12 Kohlenstoffatomen sind.

Es besteht somit weiterhin der Bedarf an der Bereitstellung weiterer und insbesondere hydrolysestabiler Alkylsilikate.

Diese Aufgabe wird durch die neuartigen Alkylsilikate der Ansprüche 1-7 gelöst.

Ein Gegenstand der Erfindung sind Alkylsilikate aufweisende Organosiliciumverbindungen enthaltend zu mindestens 90 Gew.-%, vorzugsweise zu mindestens 95 Gew.-%, Alkylsilikate der mittleren Formel (**I**)

[SiO_{4/2]a}[**(R^{x}O)SiO_{3/2}]_{b}**[**(R^{y}O)SiO_{3/2}]_{b}'**[**(R^{x}O)**₂SiO_{2/2}]_{c}

[**(R^{x}O)(R^{y}O)**SiO_{2/2}]**_{c}'**[**(R^{y}O)₂SiO_{2/2}]**_{c}**"**[**(R^{x}O)**₃SiO_{1/2}]_{d}

[**(R^{x}O)₂(R^{y}O)SiO_{1/2}]**d'[**(R^{x}O)(R^{y}O)**₂SiO_{1/2}]_{d}**"**

(R^{y}O)₃SiO_{1/2}]_{d}‴ (I),

worin die Indices **a, b, b', c, c', c", d, d', d", d‴** den mittleren Gehalt der jeweiligen Struktureinheit in der Verbindung angeben und unabhängig voneinander eine Zahl im Bereich von 0 bis 100.000 bedeuten, mit der Maßgabe, dass die Summe der Indices mindestens 2 beträgt;
und worin die Reste **R^{x}** unabhängig voneinander ausgewählt sind aus Resten, die mindestens eine der folgenden Bedingungen erfüllen:
   (a) **R^{x}** ist ein substituierter oder unsubstituierter, C₄-C₂₀-Kohlenwasserstoffrest, der am α-Kohlenstoffatom verzweigt ist,
   (b) **R^{x}** ist ein substituierter oder unsubstituierter, C₅-C₂₀-Kohlenwasserstoffrest, der am β-Kohlenstoff zweifach verzweigt ist,
   (c) **R^{x}** ist ein unsubstituierter oder mit Alkylgruppen substituierter Cyclopentyl-, Cyclohexyl- oder Cycloheptylrest mit insgesamt höchstens 9 Kohlenstoffatomen;
und wobei substituiert jeweils meint, dass der Kohlenwasserstoffrest mindestens eine funktionelle Gruppe ausgewählt aus der Gruppe bestehend aus Vinylrest, Ethinylrest, Aminorest, Epoxyrest, Thiolrest und Carbinolrest aufweist;
und worin die Reste **R^{y}** unabhängig voneinander ausgewählt sind aus der Gruppe bestehend aus (i) Wasserstoff, (ii) Methylrest und (iii) Ethylrest;
mit der Maßgabe, dass der molare Anteil an allen Resten **R^{y}** im Alkylsilikat in einem Bereich von 1 bis 15 mol-%, liegt, wobei der molare Anteil für **R^{y}** gleich (i) Wasserstoff höchstens 9 mol-% beträgt, bevorzugt höchstens 5 mol-%, jeweils bezogen auf die molare Menge der Summe an allen Resten **R^{x}** und **R^{y},**
und mit der Maßgabe, dass die Alkylsilikate aufweisenden Organosiliciumverbindungen keine SiC-gebundenen Reste enthalten.

Bevorzugt sind Alkylsilikate der mittleren Formel (**I**)

[SiO_{4/2}]ₐ[**(R^{x}O)SiO_{3/2}]_{b}**[**(R^{y}O)SiO_{3/2}]_{b}'**[**(R^{x}O)₂SiO_{2/2}]_{c}**

[**(R^{x}O)(R^{y}O)SiO_{2/2}]**_{c}'[**(R^{y}O)₂SiO_{2/2}]**_{c}"[**(R^{x}O)**₃SiO_{1/2}]**_{d}**

[**(R^{x}O)**₂**(R^{y}O)**SiO_{1/2}]_{d}'[**(R^{x}O)(R^{y}O)**₂SiO_{1/2}]_{d}**"**

[(R^{y}O)₃SiO_{1/2}]_{d}‴ (I),

worin die Indices **a, b, b', c, c', c", d, d', d", d‴** den mittleren Gehalt der jeweiligen Struktureinheit in der Verbindung angeben und unabhängig voneinander eine Zahl im Bereich von 0 bis 100.000 bedeuten, mit der Maßgabe, dass die Summe der Indices mindestens 2 beträgt;
und worin die Reste **R^{x}** unabhängig voneinander ausgewählt sind aus Resten, die mindestens eine der folgenden Bedingungen erfüllen:
   (a) **R^{x}** ist ein substituierter oder unsubstituierter, C₄-C₂₀-Kohlenwasserstoffrest, der am α-Kohlenstoffatom verzweigt ist,
   (b) **R^{x}** ist ein substituierter oder unsubstituierter, C₅-C₂₀-Kohlenwasserstoffrest, der am β-Kohlenstoff zweifach verzweigt ist,
   (c) **R^{x}** ist ein unsubstituierter oder mit Alkylgruppen substituierter Cyclopentyl-, Cyclohexyl- oder Cycloheptylrest mit insgesamt höchstens 9 Kohlenstoffatomen;
und wobei substituiert jeweils meint, dass der Kohlenwasserstoffrest mindestens eine funktionelle Gruppe ausgewählt aus der Gruppe bestehend aus Vinylrest, Ethinylrest, Aminorest, Epoxyrest, Thiolrest und Carbinolrest aufweist;
und worin die Reste **R^{y}** unabhängig voneinander ausgewählt sind aus der Gruppe bestehend aus (i) Wasserstoff, (ii) Methylrest und (iii) Ethylrest;
mit der Maßgabe, dass der molare Anteil an allen Resten **R^{y}** im Alkylsilikat in einem Bereich von 1 bis 15 mol-%, liegt, wobei der molare Anteil für **R^{y}** gleich (i) Wasserstoff höchstens 9 mol-% beträgt, bevorzugt höchstens 5 mol-%, jeweils bezogen auf die molare Menge der Summe an allen Resten **R^{x}** und **R^{y}.**

Der Begriff "verzweigt" bedeutet, dass sich an einem Kohlenstoffatom zwei Kohlenstoffreste befinden.

Der Begriff "zweifach verzweigt" bedeutet, dass sich an einem Kohlenstoffatom drei Kohlenstoffreste befinden.

Bevorzugt bedeuten die Reste **R^{y}** unabhängig voneinander einen (ii) Methylrest oder (iii) Ethylrest.

Bevorzugt werden die Reste **R^{x}** unabhängig voneinander ausgewählt aus Resten, die mindestens eine der folgenden Bedingungen erfüllen:
(a) **R^{x}** ist ein substituierter oder unsubstituierter C₄-C₁₀-Kohlenwasserstoffrest, der am α-Kohlenstoffatom verzweigt ist, insbesondere ein substituierter oder unsubstituierter, aliphatischer C₄-C₁₀-Kohlenwasserstoffrest, der am α-Kohlenstoffatom verzweigt ist,
(b) **R^{x}** ist ein substituierter oder unsubstituierter C₅-C₁₀-Kohlenwasserstoffrest, der am β-Kohlenstoff zweifach verzweigt ist, insbesondere ein substituierter oder unsubstituierter, aliphatischer C₅-C₁₀-Kohlenwasserstoffrest, der am β-Kohlenstoff zweifach verzweigt ist,
(c) **R^{x}** ist ein unsubstituierter oder mit Alkylgruppen substituierter Cyclohexylrest mit insgesamt höchstens 9 Kohlenstoffatomen.

Beispiele für Reste **R^{x}** sind der 2-Butylrest, der 3-Methyl-2-butyl, der 3-Methyl-2-pentyl, der 3-Pentylrest, der 2-Hexylrest, der 3-Hexylrest, der 2-Heptylrest, der 2-Octylrest, der 1-Phenylethylrest, der 1-Phenyl-1-propylrest, der 2,2-Dimethyl-1-propylrest, der 1,1-Dimethylethylrest, der 1,1-Dimethylpropylrest, der Cyclohexylrest, der 3,3,5-Trimethylcyclohexylrest, der Cyclopentylrest und der Cycloheptylrest.

Bevorzugte Beispiele für Reste **R^{x}** sind der 2-Butylrest, der 3-Methyl-2-butyl, der 3-Methyl-2-pentyl, der 3-Pentylrest, der 2-Hexylrest, der 3-Hexylrest, der 2-Heptylrest, der 2-Octylrest, der 1-Phenylethylrest, der 1-Phenyl-1-propyl-rest, der 2,2-Dimethyl-1-propylrest, der 1,1-Dimethylethylrest, der 1,1-Dimethylpropylrest, der Cyclohexylrest und der 3,3,5-Trimethylcyclohexylrest.

Besonders bevorzugte Beispiele für Reste **R^{x}** sind der 2-Butylrest, der 3-Methyl-2-butyl, der 3-Methyl-2-pentyl, der 3-Pentylrest, der 2-Hexylrest, der 3-Hexylrest, der 2-Heptylrest, der 2-Octylrest, der 2,2-Dimethyl-1-propylrest, der 1,1-Dimethylethylrest, der 1,1-Dimethylpropylrest, der Cyclohexylrest und der 3,3,5-Trimethylcyclohexylrest.

Beispiele für substituierte Reste **R^{x}** sind

-C(CH₃)₂-CH₂-NH₂, -CH(CH₃)-CH₂-NH₂, -CH(C₂H₅)-CH₂-NH₂,

-C(CH₃)₂-CH₂-NH-CH₂-CH₂-NH₂, -CH(CH₃)-CH₂-NH-CH₂-CH₂-NH₂,

-CH(C₂H₅)-CH₂-NH-CH₂-CH₂-NH₂,

-C(CH₃)₂-CH=CH₂, -CH(CH₃)-CH=CH₂, -CH(C₂H₅)-CH=CH₂,

-C(CH₃)₂-C=CH, -CH(CH₃)-C=CH, -CH(C₂H₅)-C=CH,

und Glycidylrest.

Vorzugsweise bedeuten die Indices **a, b, b', c, c', c", d, d', d", d‴** in Formel (**I**) unabhängig voneinander eine Zahl im Bereich von 0 bis 500, bevorzugt im Bereich von 0 bis 100, insbesondere im Bereich von 0 bis 50, insbesondere bevorzugt im Bereich von 0 bis 10, mit der Maßgabe, dass die Summe der Indices mindestens 2 beträgt.

Die erfindungsgemäßen Silikate können beispielsweise durch Hydrolyse von Verbindungen (= Chlorsilanen, Alkoxychlorsilanen oder Alkoxysilanen) der allgemeinen Formel (**II**)

**(R^{x}O)ₘCl₄₋ₘSi** **(II),**

mit m = 0, 1, 2, 3, oder 4 hergestellt werden, gegebenenfalls in Gegenwart von Alkoholen der Formel **R^{y}OH**, oder durch Alkoholyse der Verbindungen **(R^{y}O)₄Si** mit **R^{x}OH** und Wasser, wobei die Reste **R^{x}** jeweils unabhängig voneinander ausgewählt werden aus Resten, die eine der für **R^{x}** in Formel (**I**) genannten Bedingungen erfüllen,
und wobei die Reste **R^{y}** jeweils ausgewählt sind aus der Gruppe bestehend aus (i) Wasserstoff, (ii) Methylrest und (iii) Ethylrest.

Eine weitere Möglichkeit, die erfindungsgemäßen Alkylsilikate herzustellen ist, oligomere oder polymere Methoxy- oder Ethoxysilikate mit Alkoholen **R^{x}OH** umzusetzen, ggf. in Anwesenheit eines Katalysators, wobei der Rest **R^{x}** ausgewählt wird aus Resten, die eine der für **R^{x}** in Formel (**I**) genannten Bedingungen erfüllen. Als Katalysator eignen sich beispielsweise Alkalimetallhydroxide, wie z.B. KOH, oder Natriummethylat.

Die erfindungsgemäßen Verbindungen sind hydrophob, wie Hydrophobierungstests zeigen, und haben eine geringe Oberflächenspannung. Dabei sind Verbindungen mit R^{y} = Wasserstoff noch mit Gehalten an R^{y} von bis zu 9 mol-%, bezogen auf die molare Menge der Summe an allen Resten **R^{x}** und **R^{y}**, hydrophob.

Die Verbindungen sind außerdem stabil gegenüber Hydrolyse und thermostabil. Beispielsweise wurde keinerlei Kondensation der Si-OH Gruppen zu Si-O-Si bei 140°C beobachtet.

Die erfindungsgemäßen Verbindungen sind stabil und hydrophob, insbesondere wenn Ry = Wasserstoff höchstens 5 mol-% beträgt, besonders bevorzugt, wenn Ry ein Methyl- oder Ethylrest ist.

Weiterhin sind die erfindungsgemäßen Verbindungen auf einfachen Wegen herstellbar, sie haben Silicon-ähnliche niedrige Oberflächenspannungen und niedrige Glastemperaturen und können insbesondere dort eingesetzt werden, wo Silicone eingesetzt werden, beispielsweise in den Bereichen Hydrophobierung, Anti-Schaum, Textil, Kosmetik, Bautenschutz und Household-Care.

### Beispiele

### Messmethoden:

Die Bestimmung der molaren Anteile der Gruppen **R^{x}** und **R^{y}** erfolgt über ¹H-NMR-Spektroskopie, indem die charakteristischen O-C**H**₂-CH₃, O-C**H**₃ und -O**H** Gruppen integriert werden. Die Zusammensetzung der eingesetzten Ethylsilikate und der gebildeten Produkte wurde mit Hilfe der ²⁹Si-NMR-Spektroskopie bestimmt.

Die Oberflächenspannung y wurde bei 20°C mit der Methode des hängenden Tropfens bestimmt.

Die Glastemperatur wurde durch Differentialthermoanalyse bestimmt.

Die dynamische Viskosität η wurde mittels eines Stabinger Rotationsviskosimeters SVM3000 der Fa. Anton Paar bei 20°C bestimmt.

Der Hydrophobietest wurde wie folgt durchgeführt: Eine zementöse Putzplatte wurde zweimal hintereinander mit den hergestellten Alkylsilikaten beschichtet. Nach 2 Stunden wurde auf die beschichtete Putzplatte ein Tropfen des Alkylsilikats gegeben und die Veränderung der Tropfenform bei Raumtemperatur nach der Aufgabe verfolgt.

Bewertung: 0 (Tropfen zerfließt, keine Hydrophobie), + (Tropfen wird etwas flacher, gutes hydrophobes Verhalten), ++ (Tropfen bleibt unverändert, sehr gute Hydrophobie).

Silikat TES 34, ein Ethylsilikat mit 34 Gew. % SiO₂-Anteil, wird hergestellt durch hydrolytische Kondensation von 850 g Tetraethoxysilikat mit 38 g Wasser in Gegenwart von Ethanol und HCl.

### Beispiel 1: Herstellung eines Alkylsilikats mit 92 mol-% 2,2-Dimethyl-1-propylgruppen und 8 mol-% Wasserstoffgruppen

10,4 g (118 mmol) 2,2-Dimethyl-1-propanol wurden in 56 g Methyl-*tert-*butylether gelöst und mit 9,8 g Pyridin versetzt. Diese Lösung wurde unter Rühren innerhalb von 40 Minuten zu einer Lösung von 10,0 g (59,1 mmol) Siliciumtetrachlorid in 27 g Methyl-*tert*-butylether getropft, wobei die Temperatur in einem Bereich von - 15 °C bis - 5 °C gehalten wurde, und mit 15 g Methyl-*tert*-butylether nachgespült. Man lässt 1 Stunde unter Rühren nachreagieren, lässt auf Raumtemperatur erwärmen, filtriert und versetzt die klare Reaktionslösung bei Raumtemperatur mit einer Mischung aus 9,8 g Pyridin und 1,04 g Wasser. Man lässt über Nacht stehen, filtriert erneut, dampft die Lösung im Vakuum ein und erhält 10,4 g Produkt, welches 92 mol-% 2,2-Dimethyl-1-propylgruppen (R^{x} = 2,2-Dimethyl-1-propyl) und 8 mol-% Wasserstoffgruppen (R^{y} = H) enthält.
T_{g} = - 27°C.

### Beispiel 2: Herstellung eines Alkylsilikats mit 92 mol-% 2-Butylgruppen und 8 mol-% Wasserstoffgruppen

Eine Lösung von 26,2 g (353 mmol) 2-Butanol, 29,2 g (369 mmol) Pyridin und 145 g Methyl-*tert*-butylether wurde unter Rühren innerhalb 1 Stunde zu einer Lösung von 30,0 g (177 mmol) Siliciumtetrachlorid in 216 g Methyl-*tert*-butylether getropft, wobei die Temperatur in einem Bereich von - 15 °C bis - 5 °C gehalten wurde, und noch ohne Kühlung 2,5 Stunden nachgerührt. Die Reaktionsmischung wird filtriert und MTBE bei Normaldruck abdestilliert. Der Rückstand besteht aus einem Gemisch von Chloralkoxysilanen, welcher im Vakuum bei 13-15 mbar fraktioniert destilliert wird. Die Produktfraktion mit einem Siedepunkt von 80-82 °C, welche aus Cl₂Si[O(2-Bu)]₂ und ClSi[O(2-Bu)]₃ besteht, wird mit Methyl-*tert*-butylether verdünnt und mit einem Gemisch aus 6,8 g Pyridin und 0,84 g Wasser versetzt und über Nacht gerührt. Es wird filtriert und Methyl-*tert*-butylether im Vakuum entfernt. Der Rückstand besteht aus einem Alkylsilikat mit 92 mol-% 2-Butylgruppen (R^{x} = 2-Butyl) und 8 mol-% Wasserstoffgruppen (R^{y} = H) .
T_{g} = - 124°C, η = 48,6 mPa·s, y = 17,4 mN/m.

Der Gehalt an Wasserstoffgruppen war unverändert nach Erhitzen des Produktes auf 140°C über einen Zeitraum von 2h.

Eine zementöse Putzplatte wurde mit dem hergestellten Produkt imprägniert und zeigte wasserabweisende (hydrophobe) Eigenschaften. Der Hydrophobiewert beträgt: + .

Beispiel 3: Herstellung eines Alkylsilikats mit 85 mol-% 2-Butylgruppen und 15 mol-% Ethylgruppen

150 g WACKER^{®} SILIKAT TES 40 WN, ein Ethylsilikat mit ca. 40 Gew.-% SiO₂ und 60 Gew.-% Ethylgruppen, Formel I mit R^{x} = R^{y} = Ethyl und dem relativen Verhältnis a : (b + b') : (c + c' + c") : (d + d' + d" + d‴) = 1 : 19 : 42 : 38
wird mit 360 g 2-Butanol und mit 0,15 g Natriummethylat versetzt. Das sich bildende Ethanol wird über eine 40 cm lange Füllkörperkolonne langsam abdestilliert. Nach Entfernung des überschüssigen 2-Butanols wird der Rückstand zur Neutralisation mit Ammoniumchlorid behandelt und filtriert. Er besteht aus einem Alkylsilikat mit 85 mol-% 2-Butylgruppen (R^{x} = 2-Butyl) und 15 mol-% Ethylgruppen (R^{y} = Ethyl) und dem relativen Verhältnis a : (b + b') : (c + c' + c") : (d + d' + d" + d‴) = 1 : 16 : 42 : 40.
T_{g} = - 130°C, η = 23,2 mPa·s, y = 22,3 mN/m.

Eine zementöse Putzplatte wurde mit dem hergestellten Produkt imprägniert und zeigte sehr gute wasserabweisende (hydrophobe) Eigenschaften. Der Hydrophobiewert beträgt: ++ .

Zum Vergleich beträgt der Hydrophobiewert des eingesetzten WACKER^{®} SILIKAT TES 40 WN: 0 .

Der Hydrophobiewert eines Trimethylsiloxy-endständigen Polydimethylsiloxans mit einer Viskosität von ca. 35 mPa·s beträgt zum Vergleich: ++ .

### Beispiel 4: Herstellung eines Alkylsilikats mit 75 mol-% 2-Butylgruppen, 15 mol-% 2,2-Dimethyl-1-propylgruppen und 8 mol-% Ethylgruppen

78,3 g Silikat TES 34 [Formel I mit R^{x} = R^{y} = Ethyl und dem relativen Verhältnis a : (b + b') : (c + c' + c") : (d + d' + d" + d‴) = 0 : 3 : 23 : 74 ] wird wie in Beispiel 3 mit 153 g 2-Butanol umgesetzt. Das gebildete Alkylsilikat enthält 87 mol-% 2-Butylgruppen und 13 mol-% Ethylgruppen (R^{y} = Ethyl).

21 g dieses Alkylsilikats werden mit 16,1 g 2,2-Dimethyl-1-propanol auf 130-190 °C erwärmt und dabei mittels einer Füllkörperkolonne Ethanol, 2-Butanol und zuletzt überschüssiges 2,2-Dimethyl-1-propanol entfernt. Der Rückstand wird mit Ammoniumchlorid behandelt und filtriert. Er besteht aus einem Alkylsilikat mit 75 mol-% 2-Butylgruppen (R^{x} = 2-Butyl), 15 mol-% 2,2-Dimethyl-1-propylgruppen (R^{x} = 2,2-Dimethyl-1-propyl) und 8 mol-% Ethylgruppen (R^{y} = Ethyl).
T_{g} = - 134°C, η = 6,65 mPa·s, y = 19,4 mN/m.

Der Hydrophobiewert beträgt: ++ .

### Beispiel 5: Herstellung eines Alkylsilikats mit 3,3,5-Trimethylcyclohexylgruppen

190,2 g (1,34 mol) 3,3,5-Trimethylcyclohexanol, 83,8 g (1,09 mol) WACKER^{®} SILIKAT TES 40 WN, (enthält 1,09 mol Ethoxygruppen) und 81 mg Natriummethanolat werden im Kolben vorgelegt. Das bei der Reaktion entstehende Ethanol wird abdestilliert, wobei die Sumpftemperatur im Verlauf der Reaktion bis 200°C ansteigt.

Das überschüssige 3,3,5-Trimethylcyclohexanol wird bei 45 mbar, einer Sumpftemperatur von 135°C und einer Kopftemperatur von 110°C abdestilliert. Man erhält das Produkt als farblose Flüssigkeit nach Formel I mit R^{x} = 3,3,5-Trimethylcyclohexylrest, R^{y} = Ethyl, R^{x} : R^{y} = 99,8 : 0,2 und dem relativen Verhältnis a : (b + b') : (c + c' + c") : (d + d' + d" + d‴) = 1 : 28 : 33 : 38.

T_{g} = - 43°C, η = 2,46 mPa·s .

### Beispiel 6: Hydrolysestabilität

4,03 g des Produkts aus Beispiel 3 (enthaltend 34,5 mmol gebundene 2-Butylgruppen und 6.13 mmol gebundene Ethylgruppen) werden mit 4,00 g (200 mmol) D₂O und 97,1 mg (1,18 mmol) wasserfreiem Natriumacetat versetzt und die zweiphasige Mischung wird in einem verschlossenen Kolben bei 23-25°C gerührt. Die Wasserphase hat einen pH-Wert von 7,5. Der Gehalt an 2-Butanol und Ethanol in der D₂O-Phase wird nach 51 Tagen ¹H-NMR-spektroskopisch bestimmt und beträgt 35 µmol (ca. 1 mol% bezogen auf gebundene Butylgruppen) 2-Butanol und 4,77 µmol (ca. 0.08 mol % Ethanol bezogen auf gebundene Ethylgruppen).

### Beispiel 7: Hydrolysestabilität

4,97 g des Produkts aus Beispiel 5 werden mit 5,06 g (200 mmol) Wasser (pH 7.0) versetzt und 19 Tage bei 23-25°C gerührt. Die Mischung wird mit Dichlormethan extrahiert. Der Gehalt an 3,3,5-Trimethylcyclohexanol wird gaschromatographisch mit Hilfe von Naphthalin als Standard bestimmt. Der Gehalt an 3,3,5-Trimethylcyclohexanol beträgt 0,16 %.

### Beispiel 8: Hydrolysestabilität

Die Umsetzung in Beispiel 7 wird mit 220 mg Tonsil^{®} (säureaktivierte Bleicherde) wiederholt. Der Gehalt an 3,3,5-Trimethylcyclohexanol beträgt 0,67 mol %.

### Beispiel 9: Hydrolysestabilität

Die Umsetzung in Beispiel 7 wird mit 2,08 g Natriumacetat wiederholt, wodurch der pH-Wert bei 8.8 liegt. Der Gehalt an 3,3,5-Trimethylcyclohexanol beträgt 0,29 mol %.

## Patentansprüche

1. Alkylsilikate aufweisende Organosiliciumverbindungen enthaltend zu mindestens 90 Gew-%, vorzugsweise zu mindestens 95 Gew.-%, Alkylsilikate der mittleren Formel (I)
[SiO_{4/2}]ₐ[**(R^{x}O)**SiO_{3/2}]_{b}[**(R^{y}O)**SiO_{3/2}**]_{b}'**[**(R^{x}O)**₂SiO_{2/2}]**_{c}**
**[(R^{x}O)(R^{y}O)SiO_{2/2}]_{c}'[(R^{y}O)₂SiO_{2/2}]_{c}"[(R^{x}O)₃SiO_{1/2}]_{d}**
**[(R^{x}O)₂(R^{y}O)SiOi_{/2}]_{d}'[(R^{x}O)(R^{y}O)₂SiO_{1/2}]_{d}"**
[(R^{y}O)₃SiO_{1/2}]_{d}‴ (I),
worin die Indices **a, b, b', c, c', c", d, d', d", d‴** den mittleren Gehalt der jeweiligen Struktureinheit in der Verbindung angeben und unabhängig voneinander eine Zahl im Bereich von 0 bis 100.000 bedeuten, mit der Maßgabe, dass die Summe der Indices mindestens 2 beträgt;
und worin die Reste **R^{x}** unabhängig voneinander ausgewählt sind aus Resten, die mindestens eine der folgenden Bedingungen erfüllen:
(a) **R^{x}** ist ein substituierter oder unsubstituierter, C₄-C₂₀-Kohlenwasserstoffrest, der am α-Kohlenstoffatom verzweigt ist,
(b) **R^{x}** ist ein substituierter oder unsubstituierter, C₅-C₂₀-Kohlenwasserstoffrest, der am β-Kohlenstoffatom zweifach verzweigt ist,
(c) **R^{x}** ist ein unsubstituierter oder mit Alkylgruppen substituierter Cyclopentyl-, Cyclohexyl- oder Cycloheptylrest mit insgesamt höchstens 9 Kohlenstoffatomen;
und wobei substituiert jeweils meint, dass der Kohlenwasserstoffrest mindestens eine funktionelle Gruppe ausgewählt aus der Gruppe bestehend aus Vinylrest, Ethinylrest, Aminorest, Epoxyrest, Thiolrest und Carbinolrest aufweist;
und worin die Reste **R^{y}** unabhängig voneinander ausgewählt sind aus der Gruppe bestehend aus (i) Wasserstoff, (ii) Methylrest und (iii) Ethylrest;
mit der Maßgabe, dass der molare Anteil an allen Resten **R^{y}** im Silikat in einem Bereich von 1 bis 15 mol-% liegt, wobei der molare Anteil für **R^{y}** gleich (i) Wasserstoff höchstens 9 mol-% beträgt, jeweils bezogen auf die molare Menge der Summe an allen Resten **R^{x}** und **R^{y},**
und mit der Maßgabe, dass die Alkylsilikate aufweisenden Organosiliciumverbindungen keine SiC-gebundenen Reste enthalten.

2. Alkylsilikate der mittleren Formel (**I**)
**[SiO_{4/2]a}[(R^{x}O)SiO_{3/2}]_{b}[(R^{y}O)SiO_{3/2}]_{b}'[(R^{x}O)₂SiO_{2/2}]_{c}**
**[(R^{x}O)(R^{y}O)SiO_{2/2}]_{c}'[(R^{y}O)₂SiO_{2/2}]_{c}"[(R^{x}O)₃SiO_{1/2}]_{d}**
**[(R^{x}O)₂(R^{y}O)SiO_{1/2}]_{d}'[(R^{x}O)(R^{y}O)₂SiO_{1/2}]_{d}"**
[(R^{y}O)₃SiO_{&/2}]_{d‴} (I),
worin die Indices **a, b, b', c, c', c", d, d', d", d‴** den mittleren Gehalt der jeweiligen Struktureinheit in der Verbindung angeben und unabhängig voneinander eine Zahl im Bereich von 0 bis 100.000 bedeuten, mit der Maßgabe, dass die Summe der Indices mindestens 2 beträgt;
und worin die Reste **R^{x}** unabhängig voneinander ausgewählt sind aus Resten, die mindestens eine der folgenden Bedingungen erfüllen:
(a) **R^{x}** ist ein substituierter oder unsubstituierter, C₄-C₂₀-Kohlenwasserstoffrest, der am α-Kohlenstoffatom verzweigt ist,
(b) **R^{x}** ist ein substituierter oder unsubstituierter, C₅-C₂₀-Kohlenwasserstoffrest, der am β-Kohlenstoffatom zweifach verzweigt ist,
(c) **R^{x}** ist ein unsubstituierter oder mit Alkylgruppen substituierter Cyclopentyl-, Cyclohexyl- oder Cycloheptylrest mit insgesamt höchstens 9 Kohlenstoffatomen;
und wobei substituiert jeweils meint, dass der Kohlenwasserstoffrest mindestens eine funktionelle Gruppe ausgewählt aus der Gruppe bestehend aus Vinylrest, Ethinylrest, Aminorest, Epoxyrest, Thiolrest und Carbinolrest aufweist;
und worin die Reste **R^{y}** unabhängig voneinander ausgewählt sind aus der Gruppe bestehend aus (i) Wasserstoff, (ii) Methylrest und (iii) Ethylrest;
mit der Maßgabe, dass der molare Anteil an allen Resten **R^{y}** im Silikat in einem Bereich von 1 bis 15 mol-% liegt, wobei der molare Anteil für **R^{y}** gleich (i) Wasserstoff höchstens 9 mol-% beträgt, jeweils bezogen auf die molare Menge der Summe an allen Resten **R^{x}** und **R^{y}**.

3. Alkylsilikate nach Anspruch 1 oder 2, worin die Reste **R^{y}** unabhängig voneinander einen (ii) Methylrest oder (iii) Ethylrest bedeuten.

4. Alkylsilikate nach Anspruch 1, 2 oder 3, worin die Reste **R^{x}** unabhängig voneinander ausgewählt sind aus Resten, die eine der folgenden Bedingungen erfüllen:
(a) **R^{x}** ist ein substituierter oder unsubstituierter, aliphatischer C₄-C₁₀-Kohlenwasserstoffrest, der am α-Kohlenstoffatom verzweigt ist,
(b) **R^{x}** ist ein substituierter oder unsubstituierter, aliphatischer C₅-C₁₀-Kohlenwasserstoffrest, der am β-Kohlenstoff zweifach verzweigt ist,
(c) **R^{x}** ist ein unsubstituierter oder mit Alkylgruppen substituierter Cyclohexylrest mit insgesamt höchstens 9 Kohlenstoffatomen.

5. Alkylsilikate nach einem der Ansprüche 1 bis 4, worin die Reste **R^{x}** ausgewählt sind aus der Gruppe bestehend aus 2-Butylrest, 3-Methyl-2-butyl, 3-Methyl-2-pentyl, 3-Pentylrest, 2-Hexylrest, 3-Hexylrest, 2-Heptylrest, 2-Octylrest, 1-Phenylethylrest, 1-Phenyl-1-propyl-rest, 2,2-Dimethyl-1-propylrest, 1,1-Dimethylethylrest, 1,1-Dimethylpropylrest, Cyclohexylrest und 3,3,5-Trimethylcyclohexylrest.

6. Alkylsilikate nach einem der Ansprüche 1 bis 5, worin die Indices **a, b, b', c, c', c", d, d', d", d‴** unabhängig voneinander eine Zahl im Bereich von 0 bis 500 bedeuten, mit der Maßgabe, dass die Summe der Indices mindestens 2 beträgt.

7. Alkylsilikate nach einem der Ansprüche 1 bis 6, worin die Indices **a, b, b', c, c', c", d, d', d", d‴** unabhängig voneinander eine Zahl im Bereich von 0 bis 10 bedeuten, mit der Maßgabe, dass die Summe der Indices mindestens 2 beträgt.

## Claims

1. Alkyl-silicate-containing organosilicon compounds containing at least 90% by weight, preferably at least 95% by weight, of alkyl silicates of average formula (I)
**[SiO_{4/2]a[}(R^{x}O)SiO_{3/2]b[}(R^{y}O)SiO_{3/2]b}'[(R^{x}O)₂SiO_{2/2]c}**
**[(R^{x}O)(R^{y}O)SiO_{2/2]c}'[(R^{y}O)₂SiO_{2/2]c}"[(R^{x}O)₃SiOi_{/2]d}**
**[(R^{x}O)₂(R^{y}O)SiO_{1/2}]_{d}'[(R^{x}O)(R^{y}O)₂SiO_{1/2}]_{d}"**
**[(R^{y}O)₃SiO_{1/2}]_{d}‴** **(I)**,
wherein the indices **a, b, b', c, c', c", d, d', d", d‴** indicate the average content of the respective structural unit in the compound and are each independently a number within a range from 0 to 100 000, with the proviso that the sum of the indices is at least 2;
and wherein the radicals **R^{x}** are each independently selected from radicals that meet at least one of the following conditions:
(a) **R^{x}** is a substituted or unsubstituted, C₄-C₂₀ hydrocarbon radical that is branched at the α-carbon atom,
(b) **R^{x}** is a substituted or unsubstituted, C₅-C₂₀ hydrocarbon radical that is doubly branched at the β-carbon atom,
(c) **R^{x}** is an unsubstituted or alkyl-substituted cyclopentyl, cyclohexyl or cycloheptyl radical having a total of not more than 9 carbon atoms;
and where substituted in each case means that the hydrocarbon radical has at least one functional group selected from the group consisting of vinyl radical, ethynyl radical, amino radical, epoxy radical, thiol radical, and carbinol radical;
and wherein the radicals **R^{y}** are each independently selected from the group consisting of (i) hydrogen, (ii) methyl radical, and (iii) ethyl radical;
with the proviso that the molar proportion of all radicals **R^{y}** in the silicate is within a range from 1 to 15 mol%, wherein the molar proportion for **R^{y}** = (i) hydrogen is not more than 9 mol%, in each case based on the molar amount of the sum of all radicals **R^{x}** and **R^{y},** and with the proviso that the alkyl-silicate-containing organosilicon compounds contain no SiC-bonded radicals.

2. Alkyl silicates of average formula (**I**)
**[SiO_{4/2}]_{a[}(R^{x}O)SiO_{3/2}]_{b[}(R^{y}O)SiO_{3/2}]_{b}'[(R^{x}O)₂SiO_{2/2}]_{c}**
**[(R^{x}O)(R^{y}O)SiO_{2/2}]_{c}'[(R^{y}O)₂SiO_{2/2}]_{c}"[(R^{x}O)₃SiO_{1/2}]_{d}**
**[(R^{y}O)₂(R^{y}O)SiO_{1/2}]_{d}'[(R^{x}O)(R^{y}O)₂SiO_{1/2}]_{d}"**
**[(R^{y}O)₃SiO_{1/2}]_{d}‴** **(I),**
wherein the indices **a, b, b', c, c', c", d, d', d", d‴** indicate the average content of the respective structural unit in the compound and are each independently a number within a range from 0 to 100 000, with the proviso that the sum of the indices is at least 2;
and wherein the radicals **R^{x}** are each independently selected from radicals that meet at least one of the following conditions:
(a) **R^{x}** is a substituted or unsubstituted, C₄-C₂₀ hydrocarbon radical that is branched at the α-carbon atom,
(b) **R^{x}** is a substituted or unsubstituted, C₅-C₂₀ hydrocarbon radical that is doubly branched at the β-carbon atom,
(c) **R^{x}** is an unsubstituted or alkyl-substituted cyclopentyl, cyclohexyl or cycloheptyl radical having a total of not more than 9 carbon atoms;
and where substituted in each case means that the hydrocarbon radical has at least one functional group selected from the group consisting of vinyl radical, ethynyl radical, amino radical, epoxy radical, thiol radical, and carbinol radical;
and wherein the radicals **R^{y}** are each independently selected from the group consisting of (i) hydrogen, (ii) methyl radical, and (iii) ethyl radical;
with the proviso that the molar proportion of all radicals **R^{y}** in the silicate is within a range from 1 to 15 mol%, wherein the molar proportion for **R^{y}** = (i) hydrogen is not more than 9 mol%, in each case based on the molar amount of the sum of all radicals **R^{x}** and **R^{y}**.

3. Alkyl silicates according to Claim 1 or 2, wherein the radicals **R^{y}** are each independently a (ii) methyl radical or (iii) ethyl radical.

4. Alkyl silicates according to Claim 1, 2 or 3, wherein the radicals **R^{x}** are each independently selected from radicals that meet one of the following conditions:
(a) **R^{x}** is a substituted or unsubstituted, aliphatic C₄-C₁₀ hydrocarbon radical that is branched at the α-carbon atom,
(b) **R^{x}** is a substituted or unsubstituted, aliphatic C₅-C₁₀ hydrocarbon radical that is doubly branched at the β-carbon atom,
(c) **R^{x}** is an unsubstituted or alkyl-substituted cyclohexyl radical having a total of not more than 9 carbon atoms.

5. Alkyl silicates according to any of Claims 1 to 4, wherein the radicals **R^{x}** are selected from the group consisting of 2-butyl radical, 3-methyl-2-butyl, 3-methyl-2-pentyl, 3-pentyl radical, 2-hexyl radical, 3-hexyl radical, 2-heptyl radical, 2-octyl radical, 1-phenylethyl radical, 1-phenyl-1-propyl radical, 2,2-dimethyl-1-propyl radical, 1,1-dimethylethyl radical, 1,1-dimethylpropyl radical, cyclohexyl radical, and 3,3,5-trimethylcyclohexyl radical.

6. Alkyl silicates according to any of Claims 1 to 5, wherein the indices **a, b, b', c, c', c", d, d', d", d‴** are each independently a number within a range from 0 to 500, with the proviso that the sum of the indices is at least 2.

7. Alkyl silicates according to any of Claims 1 to 6, wherein the indices **a, b, b', c, c', c", d, d', d", d‴** are each independently a number within a range from 0 to 10, with the proviso that the sum of the indices is at least 2.

## Revendications

1. Composés organosiliciés présentant des silicates d'alkyle contenant à raison d'au moins 90% en poids, de préférence à raison d'au moins 95% en poids, des silicates d'alkyle de formule moyenne (I)
**[SiO_{4/2}]ₐ[(R^{x}O)SiO_{3/2}]_{b}[(R^{y}O)SiO_{3/2}]_{b}'[(R^{x}O)₂SiO_{2/2}]_{c}**
**[(R^{x}O)(R^{y}O)SiO_{2/2}]_{c}'[(R^{y}O)₂SiO_{2/2}]_{c}"[(R^{x}O)₃SiO_{1/2}]_{d}**
**[(R^{x}O)₂(R^{y}O)SiO_{1/2}]_{d}'[(R^{x}O)(R^{y}O)₂SiO_{1/2}]_{d}"**
[(R^{y}O)₃SiO_{1/2}]_{d}‴ (I),
dans laquelle les indices a, b, b', c, c', c", d, d', d", d‴ indiquent la teneur moyenne de chaque motif structural dans le composé et signifient, indépendamment les uns des autres, un nombre dans la plage de 0 à 100 000, sous réserve que la somme des indices vaille au moins 2 ;
et dans laquelle les radicaux R^{x} sont choisis, indépendamment les uns des autres, parmi les radicaux qui satisfont à au moins l'une des conditions suivantes :
(a) R^{x} représente un radical hydrocarboné en C₄-C₂₀ substitué ou non substitué, qui est ramifié sur l'atome de carbone en position α,
(b) R^{x} représente un radical hydrocarboné en C₅-C₂₀ substitué ou non substitué, qui est doublement ramifié sur l'atome de carbone en position β,
(c) R^{x} représente un radical cyclopentyle, cyclohexyle ou cycloheptyle non substitué ou substitué par des groupes alkyle, comprenant au total au plus 9 atomes de carbone ;
et "substitué" signifiant à chaque fois que le radical hydrocarboné présente au moins un groupe fonctionnel choisi dans le groupe constitué par le radical vinyle, le radical éthynyle, le radical amino, le radical époxy, le radical thiol et le radical carbinol ;
et dans laquelle les radicaux R^{y} sont choisis, indépendamment les uns des autres, dans le groupe constitué par (i) hydrogène, (ii) le radical méthyle et (iii) le radical éthyle ;
sous réserve que la proportion molaire de tous les radicaux R^{y} dans le silicate se situe dans une plage de 1 à 15% en mole, la proportion molaire pour R^{y} représentant (i) hydrogène étant d'au plus 9% en mole, à chaque fois par rapport à la quantité molaire de la somme de tous les radicaux R^{x} et R^{y},
et sous réserve que les composés organosiliciés présentant des silicates d'alkyle ne contiennent pas de radicaux liés par SiC.

2. Silicates d'alkyle présentant la formule moyenne (I)
**[SiO_{4/2]a}[(R^{x}O)SiO_{3/2}]_{b}[(R^{y}O)SiO_{3/2}]_{b}'[(R^{x}O)₂SiO_{2/2}]_{c} [(R^{x}O)(R^{y}O)SiO_{2/2}]_{c}'[(R^{y}O)₂SiO_{2/2}]_{c}‴[(R^{x}O)₃SiO_{1/2}]_{d} [(R^{x}O)₂(R^{y}O)SiO_{1/2}]_{d}'[(R^{x}O)(R^{y}O)₂SiO_{1/2}]_{d}"**
[(R^{y}O)₃SiO_{1/2}]_{d}‴ (I),
dans laquelle les indices a, b, b', c, c', c", d, d', d", d"' indiquent la teneur moyenne de chaque motif structural dans le composé et signifient, indépendamment les uns des autres, un nombre dans la plage de 0 à 100 000, sous réserve que la somme des indices vaille au moins 2 ;
et dans laquelle les radicaux R^{x} sont choisis, indépendamment les uns des autres, parmi les radicaux qui satisfont à au moins l'une des conditions suivantes :
(a) R^{x} représente un radical hydrocarboné en C₄-C₂₀ substitué ou non substitué, qui est ramifié sur l'atome de carbone en position α,
(b) R^{x} représente un radical hydrocarboné en C₅-C₂₀ substitué ou non substitué, qui est doublement ramifié sur l'atome de carbone en position β,
(c) R^{x} représente un radical cyclopentyle, cyclohexyle ou cycloheptyle non substitué ou substitué par des groupes alkyle, comprenant au total au plus 9 atomes de carbone ;
et "substitué" signifiant à chaque fois que le radical hydrocarboné présente au moins un groupe fonctionnel choisi dans le groupe constitué par le radical vinyle, le radical éthynyle, le radical amino, le radical époxy, le radical thiol et le radical carbinol ;
et dans laquelle les radicaux R^{y} sont choisis, indépendamment les uns des autres, dans le groupe constitué par (i) hydrogène, (ii) le radical méthyle et (iii) le radical éthyle ;
sous réserve que la proportion molaire de tous les radicaux R^{y} dans le silicate se situe dans une plage de 1 à 15% en mole, la proportion molaire pour R^{y} représentant (i) hydrogène étant d'au plus 9% en mole, à chaque fois par rapport à la quantité molaire de la somme de tous les radicaux R^{x} et R^{y}.

3. Silicates d'alkyle selon la revendication 1 ou 2, dans lesquels les radicaux R^{y} signifient, indépendamment les uns des autres, (ii) un radical méthyle ou (iii) un radical éthyle.

4. Silicates d'alkyle selon la revendication 1, 2 ou 3, dans lesquels les radicaux R^{x} sont choisis, indépendamment les uns des autres, parmi les radicaux qui satisfont à au moins l'une des conditions suivantes :
(a) R^{x} représente un radical hydrocarboné aliphatique en C₄-C₁₀, substitué ou non substitué, qui est ramifié sur l'atome de carbone en position α,
(b) R^{x} représente un radical hydrocarboné aliphatique en C₅-C₁₀, substitué ou non substitué, qui est doublement ramifié sur l'atome de carbone en position β,
(c) R^{x} représente un radical cyclohexyle, non substitué ou substitué par des radicaux alkyle, comprenant au total au plus 9 atomes de carbone.

5. Silicates d'alkyle selon l'une quelconque des revendications 1 à 4, dans lesquels les radicaux R^{x} sont choisis dans le groupe constitué par les radicaux 2-butyle, 3-méthyl-2-butyle, 3-méthyl-2-pentyle, 3-pentyle, 2-hexyle, 3-hexyle, 2-heptyle, 2-octyle, 1-phényléthyle, 1-phényl-1-propyle, 2,2-diméthyl-1-propyle, 1,1-diméthyléthyle, 1,1-diméthylpropyle, cyclohexyle et 3,3,5-triméthylcyclohexyle.

6. Silicates d'alkyle selon l'une quelconque des revendications 1 à 5, dans lesquels les indices a, b, b', c, c', c", d, d', d", d‴ signifient, indépendamment les uns des autres, un nombre dans la plage de 0 à 500, sous réserve que la somme des indices vaille au moins 2.

7. Silicates d'alkyle selon l'une quelconque des revendications 1 à 6, dans lesquels les indices a, b, b', c, c', c", d, d', d", d‴ signifient, indépendamment les uns des autres, un nombre dans la plage de 0 à 10, sous réserve que la somme des indices vaille au moins 2.
